# EUROPÄISCHE PATENTSCHRIFT

(11) **EP 3 507 083 B1**
(45) Veröffentlichungstag und Bekanntmachung des Hinweises auf die Patenterteilung: **15.12.2021**
(21) Anmeldenummer: 17758491.9
(22) Anmeldetag: 23.08.2017
(51) Int. Cl.: B29C 65/78, F21S 41/00, B29C 65/02, B29C 65/06, B29L 31/30

(54) **VORRICHTUNG UND VERFAHREN ZUM FÜGEN EINER LICHTSCHEIBE MIT EINEM GEHÄUSE EINER BELEUCHTUNGSEINRICHTUNG**
APPARATUS AND METHOD FOR JOINING A LENS TO A HOUSING OF AN ILLUMINATION DEVICE
PROCÉDÉ ET DISPOSITIF POUR ASSEMBLER UNE LENTILLE À UN BOÎTIER DE DISPOSITIF D'ÉCLAIRAGE

(30) Priorität: 30.08.2016 DE 102016116122; 30.08.2016 DE 102016116141
(43) Veröffentlichungstag der Anmeldung: 10.07.2019
(73) Patentinhaber: HELLA GmbH & Co. KGaA, 59552 Lippstadt (DE)
(72) Erfinder: SCHÜTTE, Andreas, 33142 Büren (DE)
(86) Internationale Anmeldenummer: PCT/EP2017/071223
(87) Internationale Veröffentlichungsnummer: WO 2018/041692

(56) Entgegenhaltungen:
- EP-A1- 3 205 481
- DE-A1-102006 053 044
- DE-A1-102010 024 169
- US-A1- 2005 225 991

## Beschreibung

Die Erfindung betrifft eine Vorrichtung und ein Verfahren zum Fügen einer Lichtscheibe mit einem Gehäuse einer Beleuchtungseinrichtung eines Kraftfahrzeugs.

### STAND DER TECHNIK

Beim Einbau einer Beleuchtungseinrichtung, wie beispielsweise einer Heckleuchte, in die Karosserie eines Kraftfahrzeuges ist eine wesentliche Anforderung, dass der Spaltverlauf bzw. Fugenverlauf zwischen der eingebauten Beleuchtungseinrichtung und der Karosserie eine möglichst geringe Abweichung von einem vorgegebenen Verlauf aufweist und damit möglichst bündig abschließt. Bei der Herstellung der Beleuchtungseinrichtung kann es jedoch zu größeren Toleranzabweichungen kommen, da sowohl die Lichtscheibe als auch das Gehäuse der Beleuchtungseinrichtung aus einem Kunststoffmaterial ausgebildet sind, bei welchen bei der Herstellung durch maßliche Fertigungsstreuungen ein Verzug entstehen kann, welcher sich unter anderem bei der Montage der Lichtscheibe an dem Gehäuse und auch bei dem späteren Einsetzen in die Karosserie des Kraftfahrzeuges auswirken kann. Die Lichtscheibe wird mit dem Gehäuse üblicherweise mittels eines Fügeprozesses, insbesondere eines Schweißprozesses verbunden, indem eine Schweißverbindung zwischen dem Randbereich der Lichtscheibe und dem Randbereich des Gehäuses ausgebildet wird.

Aus verfahrenstechnischen Gründen erfolgt die Aufnahme mittels einer Abstützung am Gehäuserand unterhalb des Schweißbereichs, um die erforderlichen Schweißkräfte aufzunehmen. Damit kann das Gehäuse nicht am kundenseitigen Referenzpunktsystem 3-2-1 in der Schweißaufnahme ausgerichtet werden, hiermit ist folglich die erforderliche durchgängige Maßkette unterbrochen.

Aus der DE 10 2010 024 169 A1 ist ein Verfahren bekannt, mittels welchem Lageabweichungen der Beleuchtungseinrichtung, insbesondere der Lichtscheibe der Beleuchtungseinrichtung, und der Karosserie eines Fahrzeuges minimiert werden sollen. Dies soll dadurch erreicht werden, dass zwischen dem Gehäuse und der Lichtscheibe wirkende Auflagepunkte mit Toleranzausgleichsbereichen versehen werden, indem das Gehäuse und die Lichtscheibe an ihren miteinander zu fügenden Randbereichen jeweils einen angespritzten Toleranzausgleichsbereich aufweisen. Bei dem Verfahren wird zunächst eine Toleranzsituation des Gehäuses zwischen den am Gehäuse ausgebildeten Auflagepunkten für die Lichtscheibe und mehreren an einer Karosserie des Kraftfahrzeugs ausgebildeten Befestigungspunkten, an denen entsprechende Befestigungselemente des Gehäuses befestigt werden, vermessen. In Abhängigkeit von der Toleranzsituation des Gehäuses wird eine Menge an Material ermittelt, das von dem Toleranzausgleichsbereich mindestens eines der Auflagepunkte abgetragen werden muss, damit die Lichtscheibe in einer Montageposition möglichst bündig zur Karosserie an dem Gehäuse angeordnet werden kann. Danach wird die ermittelte Menge an Material von dem Toleranzausgleichsbereich des mindestens einen Auflagepunktes im Rahmen einer Nacharbeit abgetragen. Anschließend wird die Lichtscheibe relativ zum Gehäuse angeordnet, wobei die Lichtscheibe durch die Auflagepunkte mit den Toleranzausgleichsbereichen in der Montageposition positioniert wird. Abschließend wird die Lichtscheibe mit dem Gehäuse in der Montageposition mittels eines Schweißverfahrens gefügt. Ein derartiges Verfahren zum Toleranzausgleich umfasst viele Bearbeitungsschritte, wodurch ein hoher Aufwand erforderlich ist.

Im Gegensatz zur mechanischen Nacharbeit erfolgt üblicherweise die Justierung der Bauteile wie Lichtscheibe und Gehäuse wie folgt: Die Lichtscheibenposition und die zugehörige Abweichung wird auf Basis einer Vermessung der Position zum Gehäuse in einem nachgeschalteten Messprozess, welcher das Referenzsystem RPS wieder abbildet, ermittelt. Auf Basis des Messprotokolls wird anschließend die Lichtscheibe neu ausgerichtet. Dieser Ausrichtvorgang berücksichtigt jedoch nur maßliche Abweichungen bezogen auf die Gesamtverteilung. Sollte die Verteilung nicht zentral zwischen der oberen Toleranzgrenze und der unteren Toleranzgrenze liegen, wird eine Mittelwertverschiebung der Verteilung vorgenommen. Der Einrichter vermittelt anschließend einmalig die Position der Lichtscheibe zum Gehäuse, mit dem Ziel eines gleichen Spaltverlaufes auf beiden Seiten. Grundsätzlich nimmt der Einrichter hierbei eine stabile Streuung an und versucht die Lage des Prozesses zwischen den oberen und unteren Toleranzgrenzen zentral zu vermitteln. Dieser Fertigungsprozess-/ablauf hat somit einen erheblichen Schwachpunkt, da er nur einen stabilen Fertigungsprozess bzw. "0" Bauteile in der Einzelteilfertigung/Vorfertigung vorsieht. Alle anfallenden Streuungen aus der Einzelteilfertigung bzw. der Vorfertigung schlagen nach der Ausrichtung somit 1:1 durch und bilden sich auf das gefügte Bauteil ab. Der Einrichter muss somit permanent in den Prozess eingreifen um Messpunkte, welche aus den Grenzen laufen, wieder neu zu vermitteln. Dies zieht eine Fehlersuche, Eingriffe in den laufenden Fertigungsprozess und weitere Maßnahmen nach sich, die gerade im Produktionsbereich hohe Kosten verursachen. Die geometrischen Reserven der Bauteile zueinander hinsichtlich einer Verschiebung sind jedoch begrenzt.

Die DE 10 2006 053044 A1 offenbart ein Verfahren und eine Vorrichtung zum Justieren einer Beleuchtungsvorrichtung für Fahrzeuge, wobei ein optisches Bauteil, insbesondere eine Linse, mit einem Träger stoffschlüssig verbunden wird. Zur Positionierung des optischen Bauteils in eine Fügeposition am Träger dient eine in drei räumlichen Achsen verschiebbare Justierplatte, welche eine ringförmige Öffnung aufweist, welche zur Aufnahme des optischen Bauteils ausgeformt ist und dabei randseitig an diesem anliegt. Nachteilig ist hier die Begrenzung auf optische Bauteile mit ringförmiger und passend dimensionierter Kontur bzw. die Notwendigkeit für jede Bauteilgeometrie eine eigene Justierplatte mit maßgeschneiderter Öffnung anfertigen und vorhalten zu müssen.

Die US 2005/225991 A1 offenbart ein Verfahren und eine Vorrichtung zum Fügen einer Lichtscheibe mit einem Lampengehäuse, wobei die Positionierung von Lichtscheibe und Gehäuse relativ zueinander durch eine rotierbare Gehäuseaufnahme sowie ein Paar von Positionierschiebern justiert werden kann, wobei das Paar von Positionierschiebern dazu eingerichtet ist, die Lichtscheibe entlang einer festen Achse relativ zu der Gehäuseaufnahme zu verschieben. Derartige Positioniermittel sind im Wesentlichen nur für die Justage von rotationssymmetrisch geformten Bauteilen ausgelegt, wohingegen komplexere Geometrien von Lampengehäuse und Lichtscheibe damit nicht geeignet einjustiert werden können.

### OFFENBARUNG DER ERFINDUNG

Der Erfindung liegt daher die Aufgabe zugrunde, eine Vorrichtung und ein Verfahren zum Fügen einer Lichtscheibe mit einem Gehäuse einer Beleuchtungseinrichtung eines Kraftfahrzeuges zur Verfügung zu stellen, mittels welcher und mittels welchem das Fügen der Lichtscheibe mit dem Gehäuse mit einer hohen Genauigkeit bei gleichzeitig reduziertem Aufwand erfolgen und ausgeführt werden kann.

Die Lösung der erfindungsgemäßen Aufgabe erfolgt mit einer Vorrichtung gemäß den Merkmalen des unabhängigen Anspruchs 1 und mit einem Verfahren gemäß den Merkmalen des unabhängigen Anspruchs 7. Bevorzugte Ausgestaltungen und Weiterbildungen der Erfindung sind in den abhängigen Ansprüchen angegeben.

Die Vorrichtung gemäß der Erfindung weist eine Aufnahmeeinrichtung zum Aufnehmen und Fixieren des Gehäuses und eine Vorzentrierungseinrichtung zur Positionierung der Lichtscheibe an dem Gehäuse auf, wobei die Vorzentrierungseinrichtung ein Rahmenelement und mehrere an dem Rahmenelement befestigte Positionierungselement zum Aufnehmen der Lichtscheibe aufweist, wobei das Rahmenelement der Vorzentrierungseinrichtung während eines Vorzentrierungsvorgangs zusammen mit der aufgenommenen Lichtscheibe relativ zu der Aufnahmeeinrichtung derart bewegbar ist, dass die Lichtscheibe an dem in der Aufnahmeeinrichtung aufgenommenen Referenzpunktsystem des Gehäuses ausrichtbar ist.

Bei der erfindungsgemäßen Vorrichtung wird durch das Vorsehen einer Vorzentrierungseinrichtung ein Toleranzausgleichssystem geschaffen, welches eine Positionierung der Lichtscheibe an dem Gehäuse mit einer sehr hohen Genauigkeit ermöglicht, so dass beim Einbau in eine Karosserie eines Kraftfahrzeugs die Lichtscheibe möglichst toleranzminimal mit der diese umschließenden Karosserie abschließen kann. Die Vorzentrierungseinrichtung ermöglicht eine Positionierung der Lichtscheibe relativ zu dem in einer festen, definierten Position angeordneten Gehäuse.

Die erfindungsgemäße Vorrichtung zum Fügen umfasst dabei im Sinne der Erfindung jede Vorrichtung, die zur Anordnung einer Lichtscheibe an ein Gehäuse einer Beleuchtungseinrichtung dient, wobei das Fügen eine Positionierung der Lichtscheibe umfasst. Unter dem Begriff des Fügens wird dabei jede Form einer Anordnung, Positionierung und/oder Ausrichtung mit einer oder ohne eine Befestigung oder stoffschlüssige, kraftschlüssige oder reibschlüssige Verbindung zwischen den Fügepartnern verstanden. Damit muss die Fügevorrichtung nicht zwingend zum stoffschlüssigen Verbinden der beiden Fügepartner ausgelegt sein. Folglich kann vorliegend unter einem Fügen auch ein Vorgang verstanden werden, der im Wesentlichen oder ausschließlich auf eine Positionierung der Fügepartner zueinander gerichtet ist.

Das Gehäuse ist dafür in einer Aufnahmeeinrichtung in einer durch ein Referenzpunktsystem definierten Position aufgenommen. Das Referenzpunktsystem weist mindestens zwei, vorzugsweise drei in einer Ebene angeordnete Referenzpunkte auf, auf welchen das Gehäuse in der Aufnahmeeinrichtung definiert positionierbar ist. Mittels der Vorzentrierungseinrichtung kann die Lichtscheibe an dem für das Gehäuse definierten Referenzpunktsystem ausgerichtet werden, so dass eine möglichst genaue und definierte Ausrichtung der Lichtscheibe relativ zu dem Gehäuse ermöglicht ist. Die Vorzentrierungseinrichtung weist ein Rahmenelement und mehrere an dem Rahmenelement befestigte Positionierungselemente zum Aufnehmen der Lichtscheibe auf. Das Rahmenelement ist beweglich gelagert, so dass die Positionierungselemente und damit auch die zwischen den Positionierungselementen aufgenommene Lichtscheibe über eine Bewegung des Rahmenelements relativ zu der Aufnahmeeinrichtung bewegt werden können. Zusammen mit der aufgenommenen Lichtscheibe kann das Rahmenelement derart bewegt werden, dass dieses in eine definierte Position relativ zu dem in der Aufnahmeeinrichtung aufgenommenen Gehäuse verschoben werden kann. Ist das Rahmenelement relativ zu dem Gehäuse ausgerichtet, sind auch die fest an dem Rahmenelement angeordneten Positionierungselemente relativ zu dem Gehäuse ausgerichtet, so dass auch die zwischen den Positionierungselementen aufgenommene Lichtscheibe relativ zu dem in der Aufnahmeeinrichtung aufgenommenen Gehäuse ausgerichtet ist. Nach dem Vorzentrierungsvorgang, wenn die Lichtscheibe in einer optimalen Position zu dem Gehäuse ausgerichtet ist, kann ein Fügeprozess, insbesondere ein Schweißprozess, erfolgen, um die Lichtscheibe mit dem Gehäuse stoffschlüssig zu verbinden.

Die Vorrichtung weist bevorzugt eine Grundplatte auf, welche zum Kopfstück im Einrichtvorgang vorab ausgerichtet wurde, auf welcher die Aufnahmeeinrichtung fest positioniert ist und auf welcher das Rahmenelement der Vorzentrierungseinrichtung beweglich gelagert ist. Das Rahmenelement ist vorzugsweise derart an der Grundplatte beweglich gelagert, dass das Rahmenelement parallel zu der Fläche der Grundplatte, also planar verschoben werden kann. Durch die Positionierung der Aufnahmeeinrichtung und des Rahmenelements und damit der Vorzentrierungseinrichtung an ein und derselben Grundplatte, kann eine definierte Positionierung der Vorzentrierungseinrichtung relativ zu der Aufnahmeeinrichtung erreicht werden.

Zur beweglichen Lagerung des Rahmenelements können an einer in Richtung zur Grundplatte zeigenden Unterseite des Rahmenelements mehrere Lagerelemente verteilt angeordnet sein. Durch die Lagerelemente kann eine besonders leichte Verschiebbarkeit des Rahmenelements entlang der Grundplatte erreicht werden. Die Lagerelemente sind beispielsweise als Kugellager ausgebildet und sind vorzugsweise gleichmäßig über die Fläche des Rahmenelements verteilt angeordnet, so dass insbesondere eine Verkippbewegung des Rahmenelements bei einer Bewegung über der Grundplatte vermieden werden kann. Die Kugellager können als Kugelbuchsen ausgebildet sein. Die Verriegelung des Rahmenelements erfolgt über Absteckhülsen.

Das Rahmenelement ist vorzugsweise derart zu der Aufnahmeeinrichtung angeordnet, dass das Rahmenelement die Aufnahmeeinrichtung ringförmig umschließt und/oder wenigstens eine rechteckige oder ringförmige insbesondere geschlossene Kontur aufweist. Das Rahmenelement kann damit die Aufnahmeeinrichtung umrahmen. Das Rahmenelement ist dabei mit seiner in Richtung Aufnahmeeinrichtung zeigenden Innenfläche von der in Richtung Rahmenelement zeigenden Außenfläche der Aufnahmeeinrichtung beabstandet, so dass eine ausreichende Bewegungsfreiheit des Rahmenelements relativ zu der Aufnahmeeinrichtung sichergestellt werden kann. Das Rahmenelement kann dabei eine beliebige Form aufweisen, wobei die Kontur bzw. Formgebung der Innenfläche des Rahmenelements vorzugsweise an die Kontur bzw. Formgebung der Außenfläche der Aufnahmeeinrichtung angepasst ist.

An dem Rahmenelement sind beispielsweise Anschlagelemente zum Positionieren des Rahmenelements an den Referenzpunkten des Gehäuses ausgebildet. Mittels der Anschlagelemente kann eine Ausrichtung des Rahmenelements relativ zu dem Gehäuse erfolgen. Das Rahmenelement kann dabei derart bewegt werden, dass das Rahmenelement mit seinen Anschlagelementen an dem Gehäuse anliegt. Hierdurch ist auch eine Ausrichtung des Rahmenelements an dem Referenzpunktsystem des Gehäuses möglich. Die Anschlagelemente können beispielsweise jeweils in Form von an der in Richtung Aufnahmeeinrichtung zeigenden Innenfläche des Rahmenelements ausgebildete Fortsätze ausgebildet sein, welche von der Innenfläche des Rahmenelements hervorstehen.

Auf der Grundplatte sind beispielsweise Aktuatoren aufgenommen, mit denen das Rahmenelement gemeinsam mit der Lichtscheibe über die Anschlagelemente am Gehäuse verspannbar ist. Die Lichtscheibe wird hierfür von den Positionierungselementen der Vorzentrierungseinrichtung aufgenommen, indem diese unter Ausführung einer planaren Bewegung in einer Ebene parallel über der Grundplatte am Rahmenelement verspannt wird.

Dafür können die Positionierungselemente derart ausgebildet sein, dass eine Anzahl der Positionierungselemente als aktiv betätigbare Blockschieber und eine Anzahl der Positionierungselemente als passiv gefederte Schieber zum einspannenden Aufnehmen der Lichtscheibe ausgebildet sind, wobei die Anzahl der als Blockschieber ausgebildeten Positionierungselemente vorzugsweise der Anzahl der als gefederten Schieber ausgebildeten Positionierungselemente entspricht. Die Lichtscheibe kann an die als Blockschieber ausgebildeten Positionierungselemente angelegt werden und anschließend mit den als gefederte Schieber ausgebildeten Positionierungselementen gegen die Blockschieber verspannt werden. Jeweils ein Blockschieber liegt dabei vorzugsweise jeweils einem gefederten Schieber gegenüber.

Ferner kann die Vorrichtung eine Halteeinrichtung aufweisen, mittels welcher die ausgerichtete Lichtscheibe nach dem Vorzentrierungsvorgang aufnehmbar und aus der Vorzentrierungseinrichtung entnehmbar ist. Die Halteeinrichtung ist vorzugsweise oberhalb der Vorzentrierungseinrichtung positioniert und relativ zu der Vorzentrierungseinrichtung bzw. der Aufnahmeeinrichtung nach oben und nach unten verfahrbar, so dass die in der Halteeinrichtung gehaltene Lichtscheibe durch Absenken in Richtung der Vorzentrierungseinrichtung und des in der Aufnahmeeinrichtung gehaltenen Gehäuses bewegt werden kann und durch Hochfahren wieder davon wegbewegt werden kann. Insbesondere während des nach dem Vorzentrierungsvorgang folgenden Fügeprozesses kann die Lichtscheibe von der Halteeinrichtung gehalten werden.

Bei dem Verfahren gemäß der Erfindung wird das Gehäuse in einer Aufnahmeeinrichtung aufgenommen und fixiert und die Lichtscheibe wird mittels einer Vorzentrierungseinrichtung, welche ein Rahmenelement und mehrere an dem Rahmenelement befestigte Positionierungselemente aufweist, an dem Gehäuse positioniert, indem die Lichtscheibe von den Positionierungselementen aufgenommen wird und das Rahmenelement zusammen mit der aufgenommenen Lichtscheibe relativ zu der Aufnahmeeinrichtung derart bewegt wird, dass die Lichtscheibe an dem in der Aufnahmeeinrichtung aufgenommenen Gehäuse ausgerichtet wird.

Das erfindungsgemäße Verfahren schafft ein Toleranzausgleichsystem, bei welchem durch den Vorzentrierungsvorgang die Lichtscheibe an dem Gehäuse mit einer sehr hohen Genauigkeit positioniert werden kann, so dass beim Einbau in eine Karosserie eines Kraftfahrzeugs die Beleuchtungseinrichtung in der Karosserie möglichst bündig einsetzbar ist und die Lage der Lichtscheibe zur Karosserie eine möglichst geringe Toleranz aufweist. Durch den Vorzentrierungsvorgang wird eine optimierte Positionierung der Lichtscheibe relativ zu dem in einer festen, definierten Position angeordneten Gehäuse ermöglicht. Dafür wird zunächst das Gehäuse in einer definierten Position in der Aufnahmeeinrichtung abgelegt und in der Aufnahmeeinrichtung fixiert. Die Vorzentrierungseinrichtung weist ein Rahmenelement und mehrere an dem Rahmenelement befestigte Positionierungselemente zum Aufnehmen der Lichtscheibe auf.

Die Lichtscheibe wird von der Vorzentrierungseinrichtung aufgenommen und mittels der Vorzentrierungseinrichtung an dem fest in der Aufnahmeeinrichtung positionierten Gehäuse ausgerichtet. Dafür ist das Rahmenelement der Vorzentrierungseinrichtung beweglich gelagert, so dass die Positionierungselemente und damit die zwischen den Positionierungselementen aufgenommene und gehaltene Lichtscheibe über eine Bewegung des Rahmenelements relativ zu der Aufnahmeeinrichtung und damit relativ zu dem Gehäuse bewegt werden können. Zusammen mit der aufgenommenen Lichtscheibe wird das Rahmenelement derart bewegt, dass dieses in eine definierte Position relativ zu dem in der Aufnahmeeinrichtung aufgenommenen Gehäuse verschoben wird. Ist das Rahmenelement relativ zu dem Gehäuse in der definierten Position ausgerichtet, sind auch die fest an dem Rahmenelement angeordneten Positionierungselemente und damit die von den Positionierungselementen gehaltene Lichtscheibe relativ zu dem Gehäuse ausgerichtet. Insbesondere während des Vorzentrierungsvorgangs ist die Aufnahmeeinrichtung im Gegensatz zu dem Rahmenelement vorzugsweise in einer festen Position fixiert, so dass eine Bewegung des Gehäuses während des Vorzentrierungsvorgangs ausgeschlossen werden kann.

Durch den Vorzentrierungsvorgang kann es ermöglicht werden, dass die Ausrichtung der Lichtscheibe ebenfalls anhand des Referenzpunktsystems erfolgt. Mittels der Vorzentrierungseinrichtung kann die Lichtscheibe an dem für das Gehäuse definierten Referenzpunktsystem ausgerichtet werden, so dass eine möglichst genaue und definierte Ausrichtung der Lichtscheibe relativ zu dem Gehäuse ermöglicht werden kann.

Die Bewegung des Rahmenelements kann vorzugsweise derart erfolgen, dass das Rahmenelement an dem in der Aufnahmeeinrichtung aufgenommenen Gehäuse ausgerichtet wird. Für die Ausrichtung an dem Gehäuse sind an dem Rahmenelement vorzugsweise Anschlagelemente ausgebildet, wobei das Rahmenelement derart bewegt werden kann, dass die an dem Rahmenelement ausgebildeten Anschlagelemente an dem Gehäuse zur Anlage gebracht werden. Mittels der Anschlagelemente kann eine Ausrichtung des Rahmenelements relativ zu dem Gehäuse erfolgen. Das Rahmenelement kann dabei derart bewegt bzw. verschoben werden, bis das Rahmenelement mit allen seinen Anschlagelementen an dem Gehäuse anliegt. Durch diese definierte Anlage des Rahmenelements an dem Gehäuse kann eine Ausrichtung des Rahmenelements an dem Referenzpunktsystem des Gehäuses ermöglicht werden. Durch die Ausrichtung und Positionierung des Rahmenelements mittels der Anschlagelemente an dem Gehäuse kann auch gleichzeitig die von den Positionierungselementen aufgenommene Lichtscheibe an dem Gehäuse ausgerichtet werden. Die Anschlagelemente können beispielsweise in Form von an der in Richtung Aufnahmeeinrichtung zeigenden Innenfläche des Rahmenelements ausgebildete Fortsätze ausgebildet sein, welche von der Innenfläche des Rahmenelements hervorstehen.

Die Bewegung des Rahmenelements kann elektrisch oder pneumatisch gesteuert werden. Beispielsweise können hierfür an dem Rahmenelement pneumatische Zylinder oder Elektromotoren angreifen, welche eine Bewegung des Rahmenelements realisieren können. Das Rahmenelement ist vorzugsweise an einer Grundplatte beweglich gelagert, so dass das Rahmenelement, welches vorzugsweise plattenförmig ausgebildet ist, parallel zu der Grundplatte verschoben werden kann. Für die bewegliche Lagerung kann das Rahmenelement mittels Kugellagern an der Grundplatte angeordnet sein. An dieser Grundplatte kann auch die Aufnahmeeinrichtung für das Gehäuse positioniert sein, wobei die Aufnahmeeinrichtung dabei vorzugsweise in einer festen Position an der Grundplatte fixiert ist.

Um einen sicheren Halt der Lichtscheibe bei der Aufnahme zwischen den Positionierungselementen gewährleisten zu können, kann die Lichtscheibe zwischen den Positionierungselementen eingespannt werden. Verrutsch- und/oder Verkippbewegungen der Lichtscheibe insbesondere während der Bewegung des Rahmenelements können dadurch verhindert werden.

Nach dem Vorzentrierungsvorgang kann die ausgerichtete Lichtscheibe von einer Halteeinrichtung aufgenommen und aus der Vorzentrierungseinrichtung entnommen werden. Die Halteeinrichtung ist vorzugsweise oberhalb der Vorzentrierungseinrichtung positioniert und relativ zu der Vorzentrierungseinrichtung bzw. der Aufnahmeeinrichtung nach oben und nach unten verfahrbar, so dass die von der Halteeinrichtung aufgenommene Lichtscheibe durch Hochfahren der Halteeinrichtung aus der Vorzentrierungseinrichtung entfernt werden kann. Nach dem Vorzentrierungsvorgang kann damit eine Übergabe der Lichtscheibe von den Positionierungselementen an die Halteeinrichtung erfolgen. Beispielsweise kann die Lichtscheibe durch Erzeugen eines Unterdrucks von der Halteeinrichtung aufgenommen und in dieser gehalten werden.

Nach dem Vorzentrierungsvorgang und damit nach dem Ausrichten der Lichtscheibe relativ zu dem Gehäuse kann ein Fügeprozess, insbesondere ein Schweißprozess, gestartet werden, bei welchem die ausgerichtete und vorzentrierte Lichtscheibe stoffschlüssig mit dem Gehäuse verbunden wird. Dies kann derart erfolgen, dass nach einer Übergabe der Lichtscheibe von den Positionierungselementen an die Halteeinrichtung die ausgerichtete und vorzentrierte Lichtscheibe mittels der Halteeinrichtung zunächst nach oben gefahren wird und damit von dem Gehäuse wegbewegt wird. Anschließend können Infrarotstrahler eingefahren werden, welche die Schweißkonturen des Gehäuses und der Lichtscheibe erwärmen. Die Schweißkonturen sind vorzugsweis die Randbereiche des Gehäuses und der Lichtscheibe. Anschließend können die Infrarotstrahler entfernt werden und die in der Halteeinrichtung gehaltene Lichtscheibe kann in Richtung des Gehäuses abgesenkt werden, bis die Lichtscheibe mit ihrer Schweißkontur bzw. ihrem Randbereich auf der Schweißkontur bzw. dem Randbereich des Gehäuses aufliegt. Anschießend kann das eigentliche Fügen, insbesondere Schweißen, erfolgen. Beispielsweise kann dies mittels eines Reibschweißverfahrens erfolgen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung einer Vorrichtung gemäß der Erfindung in einer Draufsicht von oben,
- Fig. 2: eine schematische Schnittdarstellung der in Fig. 1 gezeigten Vorrichtung, und
- Fig. 3: eine schematische Darstellung eines Ablaufs des Ausrichtens einer Lichtscheibe an einem Gehäuse einer Beleuchtungseinrichtung mittels der in Fig. 1 gezeigten Vorrichtung.

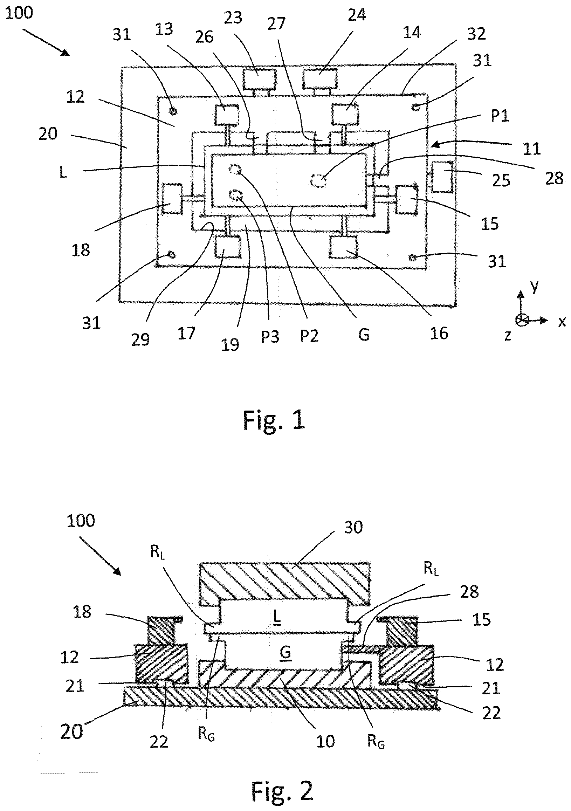

In Fig. 1 und 2 ist schematisch eine Vorrichtung 100 zum Fügen einer Lichtscheibe L mit einem Gehäuse G einer Beleuchtungseinrichtung eines Kraftfahrzeugs gezeigt. Das Fügen der Lichtscheibe L an dem Gehäuse G erfolgt mittels eines Fügeprozesses, insbesondere eines Schweißprozesses, indem der Randbereich R_{L} der Lichtscheibe L mit dem Randbereich R_{G} des Gehäuses G stoffschlüssig verbunden wird. Vor dem Fügen müssen Lichtscheibe L und Gehäuse G zueinander ausgerichtet werden, um Toleranzabweichungen auszugleichen.

Die Vorrichtung 100 weist hierfür eine Aufnahmeeinrichtung 10 zur Aufnahme des Gehäuses G auf. In der Aufnahmeeinrichtung 10 kann das Gehäuse G an einem Referenzpunktsystem ausgerichtet werden, indem das Gehäuse G auf dieses Referenzpunktsystem aufgelegt wird. Das Referenzpunktsystem weist bei der hier gezeigten Ausgestaltung drei Referenzpunkte P1, P2 und P3 auf. Diese Referenzpunkte P1, P2, P3 sind in einer x-y-Ebene aufgespannt bzw. positioniert. Über die Referenzpunkte P1, P2, P3 kann eine definierte Positionierung des Gehäuses G in der Aufnahmeeinrichtung 10 und damit in der Vorrichtung 100 erfolgen.

Ferner weist die Vorrichtung 100 eine Vorzentrierungseinrichtung 11 zur Positionierung der Lichtscheibe L an dem Gehäuse G auf.

Die Vorzentrierungseinrichtung 11 weist ein Rahmenelement 12 und mehrere an dem Rahmenelement 12 befestigte Positionierungselemente 13, 14, 15, 16, 17, 18 auf.

Das Rahmenelement 12 ist plattenförmig ausgebildet und weist eine fensterartige Öffnung 19 auf, so dass das Rahmenelement 12 um die Aufnahmeeinrichtung 10 herum angeordnet sein kann. Das Rahmenelement 12 umschließt dabei die Aufnahmeeinrichtung 10 ringförmig, wobei das Rahmenelement 12 dabei vorzugsweise mehreckig ausgebildet ist.

Sowohl das Rahmenelement 12 als auch die Aufnahmeeinrichtung 10 sind auf einer Grundplatte 20 angeordnet. Die Aufnahmeeinrichtung 10 ist fest an der Grundplatte 20 positioniert. Das Rahmenelement 12 ist hingegen beweglich an der Grundplatte 20 gelagert. Für die bewegliche Lagerung, wie in Fig. 2 gezeigt ist, können an einer in Richtung Grundplatte 20 zeigenden Unterseite 21 des Rahmenelements 12 mehrere Lagerelemente 22, beispielsweise in Form von Kugelbuchsen, verteilt angeordnet sein. Durch die bewegliche Lagerung des Rahmenelements 12 kann dieses, insbesondere während des Vorzentrierungsvorgangs, relativ zu der fest positionierten Aufnahmeeinrichtung 10 bewegt werden. Das Rahmenelement 12 kann dabei relativ zu der Aufnahmeeinrichtung 10 derart bewegt werden, dass die Lichtscheibe L relativ zu dem in der Aufnahmeeinrichtung 10 aufgenommenen Gehäuse G ausgerichtet werden kann. Durch die Ausrichtung der Lichtscheibe L an dem Gehäuse G wird die Lichtscheibe L an dem Referenzpunktsystem und damit an den Referenzpunkte P1, P2 und P3, an welchen auch das Gehäuse G ausgerichtet ist, ausgerichtet.

Die Bewegung des Rahmenelements 12 ist pneumatisch oder elektrisch steuerbar. Bei der in Fig. 1 gezeigten Ausgestaltung sind mehrere pneumatische Zylinder 23, 24, 25 vorgesehen, welche die Bewegung des Rahmenelements 12 steuern können. Die Bewegung des Rahmenelements 12 erfolgt in x- und y-Richtung, so dass das Rahmenelement 12 parallel zu der Grundplatte 20 verschoben werden kann. Um die Verschiebebewegung des Rahmenelements 12 zu realisieren, greifen die pneumatischen Zylinder 23, 24, 25 an einer Außenumfangsfläche 32 des Rahmenelements 12 an.

Zur Vorzentrierung sind an dem Rahmenelement 12 mehrere Anschlagelemente 26, 27, 28 angeformt. Diese Anschlagelemente 26, 27, 28 sind in Form von stegförmigen Fortsätzen ausgebildet und stehen von der in Richtung Aufnahmeeinrichtung 10 zeigenden Innenfläche 29 im Bereich der fensterartigen Öffnung 19 des Rahmenelements 12 hervor. Mittels der Anschlagselemente 26, 27, 28 kann das Rahmenelement 12 und mittels der Zylinder 23, 24, 25 an dem in der Aufnahmeeinrichtung 10 aufgenommenen Gehäuse G ausgerichtet und verspannt werden.

Die Lichtscheibe L wird in der Vorzentrierungseinrichtung 11 über die Positionierungselemente 13, 14, 15, 16, 17, 18 aufgenommen, ausgerichtet und eingespannt. Die Positionierungselemente 13, 14, 15, 16, 17, 18 sind dafür über den Umfang des Rahmenelements 12 verteilt angeordnet. Dadurch, dass die Positionierungselemente 13, 14, 15, 16, 17, 18 an dem beweglich gelagerten Rahmenelement 12 fest positioniert sind, können bei einer Bewegung des Rahmenelements 12 auch die Positionierungselemente 13, 14, 15, 16, 17, 18 relativ zu dem in der Aufnahmeeinrichtung 10 aufgenommenen Gehäuse G ausgerichtet werden.

Eine bestimmte Anzahl der Positionierungselemente 13, 14, 15, 16, 17, 18 sind als Blockschieber und eine bestimmte Anzahl der Positionierungselemente 13, 14, 15, 16, 17, 18 sind als gefederte Schieber ausgebildet. Bei der hier gezeigten Ausgestaltung sind drei Positionierungselemente 13, 14, 15 als Blockschieber und drei Positionierungselemente 16, 17, 18 als gefederte Schieber ausgebildet. Durch die Ausbildung der Positionierungselemente 13, 14, 15, 16, 17, 18 als Blockschieber und als gefederte Schieber kann die Lichtscheibe L beim Aufnehmen in den Positionierungselementen 13, 14, 15, 16, 17, 18 ausgerichtet werden, bevor sie zwischen den Positionierungselementen 13, 14, 15, 16, 17, 18 eingespannt wird. Jeweils ein als gefederter Schieber ausgebildetes Positionierungselement 16, 17, 18 ist dabei gegenüberliegend zu einem als Blockschieber ausgebildeten Positionierungselement 13, 14, 15 positioniert.

Nach dem Vorzentrierungsvorgang kann die Lichtscheibe L von einer Halteeinrichtung 30 durch Erzeugen eines Unterdrucks gegriffen werden und mittels der Halteeinrichtung 30 aus der Vorzentrierungseinrichtung 11 nach oben abgehoben werden. Während des nachfolgenden Fügeprozesses kann die Lichtscheibe L mittels der Halteeinrichtung 30 gehalten werden. Die Halteeinrichtung 30 ist in z-Richtung oberhalb der Aufnahmeeinrichtung 10 und oberhalb der Vorzentrierungseinrichtung 11 positioniert. Die Halteeinrichtung 30 ist in z-Richtung verfahrbar, so dass die in der Halteeinrichtung 30 gehaltene Lichtscheibe L durch eine Verfahrbewegung der Halteeinrichtung 30 auf das in der Aufnahmeeinrichtung 10 aufgenommene Gehäuse G aufgesetzt und auch von diesem abgehoben werden kann.

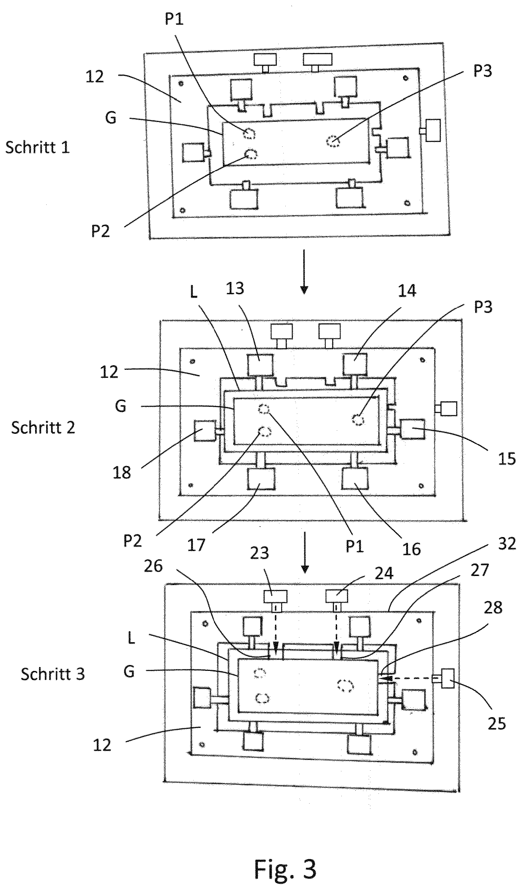

In Fig. 3 ist ein Ablauf einer Vorzentrierung einer Lichtscheibe L an einem Gehäuse G gezeigt.

Im Schritt 1 wird das Gehäuse G auf die Referenzpunkte P1, P2, P3 des Referenzpunktsystems aufgelegt und in dieser Position in der Aufnahmeeinrichtung 10 fixiert.

In dem anschließenden Schritt 2 wird die Lichtscheibe L auf das Gehäuse G aufgelegt, von den Positionierungselementen 13, 14, 15, 16, 17, 18 aufgenommen und zwischen den Positionierungselementen 13, 14, 15, 16, 17, 18 eingespannt, indem die Lichtscheibe L an den als Blockschieber ausgebildeten Positionierungselementen 13, 14, 15 angelegt wird und anschließend die als federnde Schieber ausgebildeten Positionierungselemente 16, 17, 18 gegen die Lichtscheibe L verfahren werden, so dass die Lichtscheibe L gegen die als Blockschieber ausgebildeten Positionierungselemente 13, 14, 15 gespannt wird.

Im nachfolgenden Schritt 3 wird die Vorzentrierungseinrichtung 11 zusammen mit der aufgenommenen Lichtscheibe L relativ zu dem in der Aufnahmeeinrichtung 10 aufgenommenen Gehäuse G ausgerichtet. Hierbei wird durch eine Steuerung über die pneumatischen Zylinder 23, 24, 25 , wie mit den gestrichelten Pfeilen angedeutet, das in einer Ebene planar beweglich gelagerte Rahmenelement 12 mit seinen Anschlagelementen 26, 27, 28 gegen das in der Aufnahmeeinrichtung 10 aufgenommene Gehäuse G gefahren und dadurch an dem Gehäuse G ausgerichtet. Das Rahmenelement 12 wird dabei zuerst mittels der an einer Längskante der Außenumfangsfläche 32 des Rahmenelements 12 angreifenden pneumatischen Zylinder 23, 24 derart in y-Richtung bewegt, dass zunächst die an der Längsseite des Gehäuses G zu positionierenden Anschlagelemente 26, 27 an dem Gehäuse G anliegen. Anschließend erfolgt eine Bewegung des Rahmenelementes 12 über den an einer Querkante der Außenumfangsfläche 32 des Rahmenelements 12 angreifenden pneumatischen Zylinder 25 in x-Richtung derart, dass das Anschlagelement 28 an der Querseite des Gehäuses G anliegt. Das Rahmenelement 12 liegt dann mit allen seinen Anschlagelementen 26, 27, 28 an dem Gehäuse G an. Damit ist dann das Rahmenelement 11 und auch die zwischen den Positionierungselementen 13, 14, 15, 16, 17, 18 aufgenommene Lichtscheibe L relativ zu dem Gehäuse G und damit auch relativ zu den Referenzpunkten P1, P2, P3 des Referenzpunktsystems ausgerichtet. Die Lichtscheibe L ist nun vorzentriert und relativ zu dem Gehäuse G und dem Referenzpunktsystem optimal ausgerichtet.

Anschließend kann die Halteeinrichtung 30 in z-Richtung nach unten in Richtung der Lichtscheibe L bewegt werden, um diese der Vorzentrierungseinrichtung 11 zu entnehmen, siehe Fig. 2. Dabei kann die Halteeinrichtung 30 durch Anlegen von Unterdruck die vorzentrierte und ausgerichtete Lichtscheibe L aufnehmen und halten. In einem nächsten Schritt kann dann der Fügeprozess zum stoffschlüssigen Verbinden der vorzentrierten Lichtscheibe L mit dem Gehäuse G gestartet werden. Dies kann derart erfolgen, dass nach einer Übergabe der Lichtscheibe L von den Positionierungselementen 13, 14, 15, 16, 17, 18 an die Halteeinrichtung 30 die Lichtscheibe L mittels der Halteeinrichtung 30 zunächst nach oben gefahren wird und damit von dem Gehäuse G wegbewegt wird. Anschließend können Infrarotstrahler eingefahren werden, welche die Schweißkonturen des Gehäuses G und der Lichtscheibe L erwärmen. Die Schweißkonturen können der Randbereich R_{G} des Gehäuses G und der Randbereich R_{L} der Lichtscheibe L sein. Anschließend können die Infrarotstrahler entfernt werden und die in der Halteeinrichtung 30 gehaltene Lichtscheibe L kann in Richtung des Gehäuses G abgesenkt werden, bis die Lichtscheibe L mit ihrer Schweißkontur bzw. ihrem Randbereich R_{L} auf der Schweißkontur bzw. dem Randbereich R_{G} des Gehäuses G aufliegt. Anschießend kann das eigentliche Fügen, insbesondere Schweißen, erfolgen. Beispielsweise kann dies mittels eines Reibschweißverfahrens ausgeführt werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 100: Vorrichtung

- 10: Aufnahmeeinrichtung
- 11: Vorzentrierungseinrichtung
- 12: Rahmenelement
- 13: Positionierungselement
- 14: Positionierungselement
- 15: Positionierungselement
- 16: Positionierungselement
- 17: Positionierungselement
- 18: Positionierungselement
- 19: Fensterartige Öffnung
- 20: Grundplatte
- 21: Unterseite
- 22: Kugellager
- 23: Aktuator, pneumatischer Zylinder
- 24: Aktuator, pneumatischer Zylinder
- 25: Aktuator, pneumatischer Zylinder
- 26: Anschlagelement
- 27: Anschlagelement
- 28: Anschlagelement
- 29: Innenfläche
- 30: Halteeinrichtung
- 31: Befestigungselement
- 32: Außenumfangsfläche

- G: Gehäuse
- L: Lichtscheibe
- R_{G}: Randbereich des Gehäuses
- R_{L}: Randbereich der Lichtscheibe
- P1: Referenzpunkt
- P2: Referenzpunkt
- P3: Referenzpunkt

## Patentansprüche

1. Vorrichtung (100) zum Fügen einer Lichtscheibe (L) mit einem Gehäuse (G) einer Beleuchtungseinrichtung eines Kraftfahrzeugs, mit einer Aufnahmeeinrichtung (10) zum Aufnehmen und Fixieren des Gehäuses (G), und einer Vorzentrierungseinrichtung (11) zur Positionierung der Lichtscheibe (L) an dem Gehäuse (G), wobei die Vorzentrierungseinrichtung (11) ein Rahmenelement (12) und mehrere an dem Rahmenelement (12) befestigte Positionierungselemente (13, 14, 15, 16, 17, 18) zur Aufnahme der Lichtscheibe (L) aufweist, wobei das Rahmenelement (12) der Vorzentrierungseinrichtung (11) während eines Vorzentrierungsvorgangs zusammen mit der aufgenommenen Lichtscheibe (L) relativ zu der Aufnahmeeinrichtung (10) derart bewegbar ist, dass die Lichtscheibe (L) am in der Aufnahmeeinrichtung (10) aufgenommenen Gehäuse (G) ausrichtbar ist.

2. Vorrichtung (100) nach Anspruch 1, **dadurch gekennzeichnet, dass** eine Grundplatte (20) vorgesehen ist, auf welcher die Aufnahmeeinrichtung (10) fest positioniert ist und auf welcher das Rahmenelement (12) beweglich gelagert ist.

3. Vorrichtung (100) nach Anspruch 1 oder 2, **dadurch gekennzeichnet, dass** an dem Rahmenelement (12) Anschlagelemente (26, 27, 28) zum Positionieren des Rahmenelements (12) an dem Gehäuse (G) ausgebildet sind und/oder dass das Rahmenelement (12) gemeinsam mit der aufgenommenen Lichtscheibe (L) über der Grundplatte (20) in einer Ebene planar und insbesondere horizontal frei beweglich ist.

4. Vorrichtung (100) nach einem der Ansprüche 1 bis 3, **dadurch gekennzeichnet, dass** auf der Grundplatte (20) Aktuatoren (23, 24, 25) aufgenommen sind, mit denen das Rahmenelement (12) gemeinsam mit der Lichtscheibe (L) über die Anschlagelemente (26, 27, 28) am Gehäuse (G) verspannbar ist.

5. Vorrichtung (100) nach einem der vorgenannten Ansprüche, **dadurch gekennzeichnet, dass** eine Anzahl der Positionierungselemente (13, 14, 15, 16, 17, 18) als aktiv betätigbare Blockschieber und eine Anzahl der Positionierungselemente (13, 14, 15, 16, 17, 18) als passive, gefederte Schieber für ein einspannendes Aufnehmen der Lichtscheibe (L) mittels dem Rahmenelement (12) ausgebildet sind, und/oder wobei die Anzahl der als Blockschieber ausgebildeten Positionierungselemente (13, 14, 15, 16, 17, 18) der Anzahl der als gefederte Schieber ausgebildeten Positionierungselemente (13, 14, 15, 16, 17, 18) entspricht.

6. Vorrichtung (100) nach einem der vorgenannten Ansprüche, **dadurch gekennzeichnet, dass** eine Halteeinrichtung (30) vorgesehen ist, mittels welcher die ausgerichtete Lichtscheibe (L) nach dem Vorzentrierungsvorgang aufnehmbar und aus der Vorzentrierungseinrichtung (11) entnehmbar ist.

7. Verfahren zum Fügen einer Lichtscheibe (L) mit einem Gehäuse (G) einer Beleuchtungseinrichtung eines Kraftfahrzeugs, bei welchem das Gehäuse (G) in einer Aufnahmeeinrichtung (10) aufgenommen und fixiert wird und bei welchem während eines Vorzentrierungsvorgangs die Lichtscheibe (L) mittels einer Vorzentrierungseinrichtung (11), welche ein Rahmenelement (12) und mehrere an dem Rahmenelement (12) befestigte Positionierungselemente (13, 14, 15, 16, 17, 18) aufweist, an dem Gehäuse (G) positioniert wird, indem die Lichtscheibe (L) von den Positionierungselementen (13, 14, 15, 16, 17, 18) aufgenommen wird und das Rahmenelement (12) zusammen mit der aufgenommenen Lichtscheibe (L) relativ zu der Aufnahmeeinrichtung (10) derart bewegt wird, dass die Lichtscheibe (L) am in der Aufnahmeeinrichtung (10) aufgenommenen Gehäuse (G) ausgerichtet wird.

8. Verfahren nach Anspruch 7, **dadurch gekennzeichnet, dass** das Gehäuse (G) beim Aufnehmen und Fixieren in der Aufnahmeeinrichtung (10) anhand eines mindestens zwei Referenzpunkte (P1, P2, P3) aufweisenden Referenzpunktsystems ausgerichtet wird und/oder dass die Ausrichtung der Lichtscheibe (L) anhand des Referenzpunktsystems erfolgt.

9. Verfahren nach Anspruch 7 oder 8, **dadurch gekennzeichnet, dass** bei der Bewegung des Rahmenelements (12) das Rahmenelement (12) an dem in der Aufnahmeeinrichtung (10) aufgenommenen Gehäuse (G) an einem Referenzpunktsystem ausgerichtet wird, indem das Rahmenelement (12) derart bewegt wird, dass an dem Rahmenelement (12) ausgebildete Anschlagelemente (26, 27, 28) an dem Gehäuse (G) des Referenzpunktsystems zur Anlage gebracht werden.

10. Verfahren nach einem der Ansprüche 7 bis 9, **dadurch gekennzeichnet, dass** bei der Aufnahme der Lichtscheibe (L) von den Positionierungselementen (13, 14, 15, 16, 17, 18) die Lichtscheibe (L) zwischen den Positionierungselementen (13, 14, 15, 16, 17, 18) ausgerichtet und eingespannt wird.

11. Verfahren nach einem der Ansprüche 7 bis 10, **dadurch gekennzeichnet, dass** auf der Grundplatte (20) Aktuatoren (23, 24, 25) aufgenommen sind, mit denen das Rahmenelement (12) gemeinsam mit der Lichtscheibe (L) über die Anschlagelemente (26, 27, 28) am Referenzpunktsystem des Gehäuses (G) ausgerichtet ist.

12. Verfahren nach einem der Ansprüche 7 bis 11, **dadurch gekennzeichnet, dass** nach dem Vorzentrierungsvorgang die ausgerichtete Lichtscheibe (L) von einer Halteeinrichtung (30) aufgenommen und aus der Vorzentrierungseinrichtung (11) übernommen wird und dass wenigstens mittelbar nachfolgend nach dem Vorzentrierungsvorgang ein Fügeprozess gestartet wird, bei dem die Lichtscheibe (L) stoffschlüssig mit dem Gehäuse (G) verbunden wird.

## Claims

1. Device (100) for joining a lens (L) with a housing (G) of an illumination device of a motor vehicle with an accommodating device (10) for accommodating and fastening the housing (G) and a pre-centring device (11) for positioning the lens (L) on the housing (G), where the pre-centring device (11) features a frame element (12) and several positioning elements (13, 14, 15, 16, 17, 18) mounted to the frame element (12) for accommodating the lens (L), where the frame element (12) of the pre-centring device (11) can be moved, during a pre-centring process, together with the lens (L) being accommodated, relative to the accommodating device (10) in such a way that the lens (L) can be aligned to the housing (G) accommodated in the accommodating device (10).

2. Device (100) in accordance with Claim 1, **characterized in that** a base plate (20) is provided for on which the accommodating device (10) is fixed in position and on which the frame element (12) is mounted such that it can be moved.

3. Device (100) in accordance with Claim 1 or 2, **characterized in that** stop elements (26, 27, 28) for positioning the frame elements (12) to the housing (G) are formed on the frame element (12) and/or **in that** the frame element (12) can be freely moved, together with the lens (L) being accommodated, via the base plate (20) planarly and specifically horizontally in one plane.

4. Device (100) in accordance with one of Claims 1 through 3, **characterized in that** actuators (23, 24, 25) are accommodated on the base plate (20), by means of which the frame element (12) can be tensioned together with the lens (L) via the stop elements (26, 27, 28) on the housing (G).

5. Device (100) in accordance with one of the aforementioned claims, **characterized in that** a number of the positioning elements (13, 14, 15, 16, 17, 18) take the form of block sliders that can be actively actuated and a number of positioning elements (13, 14, 15, 16, 17, 18) take the form of passive, sprung sliders for accommodating and tensioning the lens (L) by means of the frame element (12) and/or where the number of positioning elements (13, 14, 15, 16, 17, 18) taking the form of block sliders corresponds to the number of positioning elements (13, 14, 15, 16, 17, 18) taking the form of sprung sliders.

6. Device (100) in accordance with one of the aforementioned claims **characterized in that** a holding device (30) is provided for, by means of which the aligned lens (L) can be accommodated after the pre-centring process and removed from the pre-centring device (11).

7. Process for joining a lens (L) to a housing (G) of an illumination device of a motor vehicle in which the housing (G) is accommodated and fastened in an accommodating device (10) and in which the lens (L) is positioned on the housing (G) during a pre-centring process by means of a pre-centring device (11) that features a frame element (12) and several positioning elements (13, 14, 15, 16, 17, 18) fastened to the frame element (12), by the lens (L) being accommodated by the positioning elements (13, 14, 15, 16, 17, 18) and the frame element (12) is moved together with the accommodated lens (L) relative to the accommodating device (10) in such a way that the lens (L) is aligned to the housing (G) held in the accommodating device (10).

8. Process in accordance with Claim 7, **characterized in that** the housing (G) is aligned, when being accommodated and fastened in the accommodating device (10), on the basis of a reference point system featuring at least two reference points (P1, P2, P3) and/or **in that** the alignment of the lens (L) is performed on the basis of a reference point system.

9. Process in accordance with Claim 7 or 8, **characterized in that** when the frame element (12) is moved the frame element (12) is aligned to the housing (G) accommodated in the accommodating device (10) using a reference point system, by the frame element (12) being moved in such a way that the stop elements (26, 27, 28) formed on the frame element (12) abut on the housing (G) of the reference point system.

10. Process in accordance with one of Claims 7 through 9, **characterized in that** when the lens (L) is held by the positioning elements (13, 14, 15, 16, 17, 18) the lens (L) is aligned and tensioned between the positioning elements (13, 14, 15, 16, 17, 18).

11. Process in accordance with one of Claims 7 through 10 **characterized in that** actuators (23, 24, 25) are accommodated on the base plate (20) by means of which the frame element (12), together with the lens (L) is aligned via the stop elements (26, 27, 28) to the reference point system of the housing (G).

12. Process in accordance with one of Claims 7 through 11 **characterized in that** after the pre-centring process, the aligned lens (L) is accommodated by a holding device (30) and taken over from the pre-centring device (11) and **in that** a joining process is launched at least indirectly subsequent to the pre-centring process, a joining process in which the lens (L) is firmly bonded to the housing (G) by means of a bonding method.

## Revendications

1. Dispositif (100) conçu pour joindre un réflecteur (L) avec boîtier (G) d'un dispositif d'éclairage d'un véhicule automobile, avec un dispositif de réception (10) pour recevoir et fixer le boîtier (G), et un dispositif de précentrage (11) pour le positionnement du réflecteur (L) sur le boîtier (G), le dispositif de précentrage (11) présentant un élément cadre (12) et plusieurs éléments de positionnement (13, 14, 15, 16, 17, 18) fixés à l'élément cadre (12) pour recevoir le réflecteur (L), l'élément cadre (12) du dispositif de précentrage (11) étant mobile avec le réflecteur (L) par rapport au dispositif de réception (10) pendant un processus de précentrage de telle sorte que le réflecteur (L) puisse être aligné avec le boîtier (G) logé dans le dispositif de réception (10).

2. Dispositif (100) selon la revendication 1, **caractérisé en ce qu'une** plaque de base (20) est prévue, sur laquelle le dispositif de réception (10) est positionné de manière fixe et sur laquelle l'élément cadre (12) est monté de manière mobile.

3. Dispositif (100) selon la revendication 1 ou 2, **caractérisé en ce que** des éléments de butée (26, 27, 28) pour positionner l'élément cadre (12) sur le boîtier (G) sont formés sur l'élément cadre (12) et/ou **en ce que** l'élément cadre (12) avec le réflecteur (L) bouge librement dans un plan planaire et en particulier à l'horizontale au-dessus de la plaque de base (20).

4. Dispositif (100) selon l'une des revendications 1 à 3, **caractérisé en ce que** des actionneurs (23, 24, 25) sont montés sur la plaque de base (20), au moyen desquels l'élément cadre (12) avec le réflecteur (L) peut être serré sur le boîtier (G) au moyen des éléments de butée (26, 27, 28).

5. Dispositif (100) selon l'une des revendications précitées, **caractérisé en ce qu'**un certain nombre d'éléments de positionnement (13, 14, 15, 16, 17, 18) sont conçus comme des glissières de bloc actionnables activement et un certain nombre d'éléments de positionnement (13, 14, 15, 16, 17, 18) sont conçus comme des glissières passives à ressort pour recevoir par serrage le réflecteur (L) au moyen de l'élément cadre (12), et/ou sachant que le nombre d'éléments de positionnement (13, 14, 15, 16, 17, 18) conçus comme des glissières de bloc correspond au nombre d'éléments de positionnement (13, 14, 15, 16, 17, 18) conçus comme des glissières à ressort.

6. Dispositif (100) selon l'une des revendications précitées, **caractérisé en ce qu'**il est prévu un dispositif de maintien (30) au moyen duquel le réflecteur (L) aligné peut être réceptionné après l'opération de pré-centrage et retiré du dispositif de pré-centrage (11).

7. Procédé conçu pour joindre un réflecteur (L) avec boîtier (G) d'un dispositif d'éclairage d'un véhicule automobile, dans lequel le boîtier (G) est logé et fixé dans un dispositif de réception (10) et dans lequel, pendant une opération de pré-centrage, le réflecteur (L) est positionné sur le boîtier (G) au moyen d'un dispositif de pré-centrage (11) qui présente un élément cadre (12) et plusieurs éléments de positionnement (13, 14, 15, 16, 17, 18) fixés à l'élément cadre (12), le réflecteur (L) étant reçu par les éléments de positionnement (13, 14, 15, 16, 17, 18) et l'élément cadre (12) avec réflecteur (L) étant déplacé par rapport au dispositif de réception (10) de sorte que le réflecteur (L) soit aligné avec le boîtier (G) logé dans le dispositif de réception (10).

8. Procédé selon la revendication 7, **caractérisé en ce que** le boîtier (G) est aligné à l'aide d'un système de points de référence comportant au moins deux points de référence (P1, P2, P3) pour son logement et sa fixation dans le dispositif de réception (10) et/ou **en ce que** l'alignement du réflecteur (L) est réalisé à l'aide du système de points de référence.

9. Procédé selon la revendication 7 ou 8, **caractérisé en ce que,** pendant le déplacement de l'élément cadre (12), l'élément cadre (12) est aligné à l'aide d'un système de points de référence sur le boîtier (G) logé dans le dispositif de réception (10) par déplacement de l'élément cadre (12) de sorte que des éléments de butée (26, 27, 28) formés sur l'élément cadre (12) sont amenés en contact avec le boîtier (G) du système de points de référence.

10. Procédé selon l'une des revendications 7 à 9, **caractérisé en ce que,** lorsque le réflecteur (L) est reçu par les éléments de positionnement (13, 14, 15, 16, 17, 18), le réflecteur (L) est aligné et serré entre les éléments de positionnement (13, 14, 15, 16, 17, 18).

11. Procédé selon l'une des revendications 7 à 10, **caractérisé en ce que** des actionneurs (23, 24, 25) sont logés sur la plaque de base (20), au moyen desquels l'élément cadre (12) est aligné avec le réflecteur (L) au moyen des éléments de butée (26, 27, 28) sur le système de points de référence du boîtier (G).

12. Procédé selon l'une des revendications 7 à 11, **caractérisé en ce que,** après le processus de précentrage, le réflecteur (L) aligné est reçue par un dispositif de réception (30) et repris du dispositif de précentrage (11), et **en ce que**, au moins indirectement après le processus de précentrage, un processus de jonction est lancé, au cours duquel le réflecteur (L) est assemblé avec le boîtier (G) par une liaison matérielle.
